# EUROPEAN PATENT APPLICATION

(11) **EP 2 314 450 A1**
(43) Date of publication of application: **27.04.2011**
(21) Application number: 10187538.3
(22) Date of filing: 14.10.2010
(51) Int. Cl.: B32B 15/08, B32B 15/20, B32B 27/32, B65D 75/04, B65D 75/14, B65D 85/76

(54) **Wrapping film, preferably for dairy produce - e.g. butter and cheese**

(30) Priority: 20.10.2009 DK 200970163
(71) Applicant: Ehrno Flexible A/S, 7400 Herning (DK)
(72) Inventor: Østergaard, Ole, 7400, Herning (DK)
(74) Representative: Gregersen, Niels Henrik

(57) **Abstract**

A wrapping film (2), preferably for dairy products, by way of example butter and cheese, and of the type consisting of a laminate which at an external side is provided with a coated aluminium foil (4, 8), where the aluminium foil (4) has a thickness of 5-10 µm and is laminated with a "paper-like" HDPE film (6) with a thickness of 20-50 µm, the foil and film (4, 6) being laminated together by means of a glue (10) which resists sterilization/autoclaving up to 126°. Hereby is achieved a considerably improved "deadfold" packing film which is particularly suited for packing dairy products, e.g. butter and cheese. The term "deadfold" indicates that after folding, by way of example by closing a common butter packing, the packing film continues to maintain sharp and durable folds, that is the butter packing will not tend to open or unfold by itself.

## Description

### Field of the Invention

The present invention concerns a wrapping film, preferably for dairy products, e.g. butter and cheese, and of the kind indicated in the preamble of claim 1.

### Background of the Invention

Prior art wrapping film of the type which in succession e.g. consists of the following laminated layers: coated aluminium, extruded polymer, paper, extruded polymer, appear to have a tendency of delaminating, probably due to fat, in particular animal fat, which may partially dissolve the polymer layers (plastic) which is not allowable in view of an official limit value for migration < 100 ppm, cf. for example EU Directive 94/62/EC.

### Object of the Invention

On that background, the invention has the purpose of indicating a new and improved wrapping film that fulfils the requirements of the said authority, and which also entail unique advantages, in particular with regard to handling of packaging and storage stability by using the wrapping film according to the invention.

### Description of the Invention

The wrapping film according to the invention is peculiar in that the aluminium foil has a thickness of 5-10 µm and is laminated with a "paper-like" HDPE film with a thickness of 20-60 µm, the foil and film being laminated together by means of a glue which resists sterilization/autoclaving up to 126°.

Hereby is achieved a considerably improved "deadfold" wrapping film which is particularly suited for packing block-shaped dairy products, by way of example butter and cheese. The term "deadfold" indicates that after folding, by way of example by fold-closing a common butter packing, the wrapping film continues to maintain sharp and durable folds, that is the butter packing will not tend to open or unfold by itself.

Another very significant advantage by the wrapping film according to the invention is that the lamination of the wrapping film is very efficient, meaning that any tendency to delaminating will not exist at all, even if the wrapping film is used for packing dairy products containing animal fat, for example butter and cheese.

The wrapping film according to the invention when used for packing butter may advantageously be designed such that the external aluminium foil has a thickness of 6.35 µm and the HDPE film has a thickness of 30-40 µm.

Particularly for use in packing cheese it may be advantageous to use a wrapping film according to the invention wherein the external aluminium foil has a thickness of 9 µm and the HDPE film has a thickness of up to 50 µm.

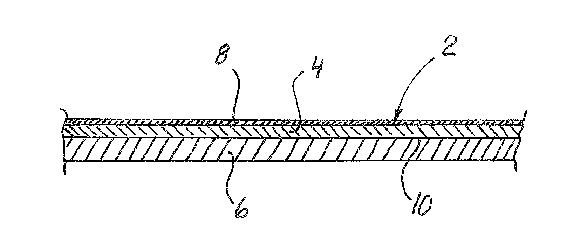

### Description of the Drawing

The invention is explained in more detail in connection with the drawing which shows an embodiment of a wrapping film according to the invention.

### Detailed Description of Embodiments of the Invention

The drawing shows an enlarged section through a wrapping film 2 consisting of an aluminium foil 4 which is laminated with a foil or film 6 constituted by a calcareous polyethylene HDPE film.

The aluminium foil 4 is externally provided with a sealing in the form of a thin coating of lacquer 8 which has a thickness in the magnitude 1 µm. At the opposing inner side, the aluminium foil 4 is laminated together with the HDPE film 6 by means of glue or an adhesive 10 that resists sterilization/autoclaving up to 126°, by way of example a polyurethane adhesive.

The wrapping film 2 may be provided with advertising print in the form of trademark, informative label etc. which is placed externally on the wrapping film 2 under or upon the sealing coating 8, the primary purpose of which being to protect the aluminium film 4 such that it does not come off on conveyor belts or surfaces.

Finally, it is to be restated that a very important advantage by the wrapping film according to the invention is that the lamination of the wrapping film is very efficient, meaning that any tendency to delaminating will not exist at all - even if the wrapping film is used for packing dairy products containing animal fat - by way of example butter and cheese.

## Claims

1. Wrapping film (2), preferably for dairy products, e.g. butter and cheese, and of the type consisting of a laminate which at an external side is provided with a coated aluminium foil (4, 8), **characterised in that** the aluminium foil (4) has a thickness of 5-10 µm and is laminated with a "paper-like" HDPE film (6) with a thickness of 20-50 µm, the foil and film (4, 6) being laminated together by means of a glue (10) which resists sterilization/autoclaving up to 126°.

2. Wrapping film (2) according to claim 1, **characterised in that** the external aluminium foil (4) has a thickness of 6.35 µm, and the HDPE film (6) has a thickness of 30-40 µm.

3. Wrapping film (2) according to claim 1, **characterised in that** the external aluminium foil (4) has a thickness of 9 µm, and the HDPE film (6) has a thickness of up to 50 µm.
